# EUROPÄISCHE PATENTSCHRIFT

(11) **EP 0 668 722 B1**
(45) Veröffentlichungstag und Bekanntmachung des Hinweises auf die Patenterteilung: **05.03.1997**
(21) Anmeldenummer: 93924605.4
(22) Anmeldetag: 09.11.1993
(51) Int. Cl.: A01N 63/04

(54) **SYNERGISTISCHE MITTEL ZUR BEKÄMPFUNG VON INSEKTEN UND AKARINA**
SYNERGISTIC AGENTS FOR CONTROLLING INSECTS AND MITES
AGENTS SYNERGIQUES DE LUTTE CONTRE LES INSECTES ET LES ACARIENS

(30) Priorität: 13.11.1992 DE 4238311
(43) Veröffentlichungstag der Anmeldung: 30.08.1995
(73) Patentinhaber: Hoechst Schering AgrEvo GmbH, 13509 Berlin (DE)
(72) Erfinder: KERN, Manfred, D-55296 Lörzweiler (DE)
(86) Internationale Anmeldenummer: EP9303128
(87) Internationale Veröffentlichungsnummer: WO9410846

(56) Entgegenhaltungen:
- WO-A-92/20229
- US-A- 4 271 181
- US-A- 4 751 082
- JOURNAL OF ECONOMIC ENTOMOLOGY Bd. 76, Nr. 6 , Dezember 1983 , COLLEGE PARK, MARYLAND US Seiten 1437 - 1441 T.E.ANDERSON ET. AL. 'Compatibility of Beauveria bassiana Isolates with Insecticide Formulations Used in Colorado Potato Beetle (Coleoptera: Chrysomelidae) Control'
- JOURNAL OF INVERTEBRATE PATHOLOGY Bd. 52, Nr. 1 , Juli 1988 Seiten 66 - 72 C.PRIOR ET. AL. 'Infectivity of Oil and Water Formulations of Beauveria bassiana (Deuteromycotina: Hyphomycetes) to the Cocoa Weevil Pest Pantorhytes plutus (Coleoptera: Curculionidae)' in der Anmeldung erwähnt
- ARQUIVOS DE BIOLOGIA E TECNOLOGIA Bd. 34, Nr. 2 , Juni 1991 Seiten 287 - 302 A.M.V.BOAS 'The effect of insecticide subdoses on Beauveria bassiana fungus and on borers of sugar cane'
- ENVIRONMENTAL ENTOMOLOGY Bd. 3, Nr. 1 , 15. Februar 1974 Seiten 33 - 38 I.OLMERT ET. AL. 'Sensitivity of the Entomopathogenic Fungi, Beauveria bassiana, Verticillium lecanii, and Verticillium spp. to Fungicides and Insecticides'

## Beschreibung

Biologische Schädlingsbekämpfungsmittel reichen oft in ihrer Wirkungsstärke nicht aus, um Nutzpflanzenkulturen ausreichend vor Schädlingen zu schützen. Deshalb werden bis heute vorrangig chemische Insektizide eingesetzt. Im Rahmen des integrierten Pflanzenschutzes will man den Einsatz von Chemikalien minimieren, ohne gleichzeitig in Kauf nehmen zu müssen, daß Ernteverluste auftreten. Aus der Veröffentlichung von Soper et al. (1974, Environmental Entomology, 3, 560-562) ist bekannt, daß das Wachstum von insektenpathogenen Pilzen durch den gleichzeitigen Einsatz von Insektiziden gehemmt wird. Dies ist zwar von dem eingesetzten Mittel und dessen Menge abhängig, aber aus den Daten ist ersichtlich, daß Endosulfan das Wachstum der Pilze stark beieinträchtigt. Auch Filho et al. (1987, Biologico, 53, 7-12, 69-70) berichten, daß das Wachstum von Beauveria bassiana durch verschiedene Insektizide, unter anderem Endosulfan, gehemmt wird.

Überraschenderweise wurde nun gefunden, daß die Verbindung Endosulfan und Sporen bzw. Partikeln des insektenpathogenen Pilzes Beauveria bassiana bei einer gemeinsamen Anwendung eine außerordentlich gute Wirksamkeit gegen ein breites Spektrum verschiedener Insekten und Akarina zeigen.

Gegenstand der vorliegenden Erfindung sind insektizide und akarizide Mittel, gekennzeichnet durch einen wirksamen Gehalt an Endosulfan (A) 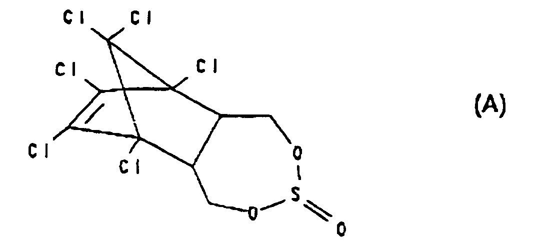 in Kombination mit dem insektenpathogenen Pilz Beauveria bassiana (B).

Die Verbindung Endosulfan ist einschlägig aus der Literatur bekannt und wird z. B. in Form von Thiodan von der Hoechst AG (Frankfurt, Deutschland) hergestellt und vertrieben. Der Pilz Beauveria bassiana wurde von Bassi, A. (1836, C. R. Acad. Sci. Paris 2, 434 bis 436), Domsch, V. H. et al. (1980, Compendium of Soil Fungi 1, 136 bis 139) und Samson, R. A. et al. (1988, Atlas of Entomopathogenic Fungi, Springer-Verlag, Berlin) beschrieben und ist von Mycotech (Butte, Montana, USA), der Hoechst AG und der Fermone Corp. (Phoenix, Arizona, USA) erhältlich. Im folgenden wird für die beiden Komponenten A oder B auch jeweils der Begriff Wirkstoff verwendet.

Die Mischungsverhältnisse der beiden Komponenten können innerhalb weiter Grenzen schwanken. Sie sind insbesondere abhängig vom eingesetzten Mischungspartner, vom Entwicklungsstadium der Schädlinge und den Klimabedingungen.

Die erfindungsgemäßen Wirkstoffkombinationen können sowohl als Mischformulierungen der beiden Komponenten vorliegen, die dann in üblicher Weise mit Wasser verdünnt oder als Granulate zur Anwendung gebracht werden, oder als sogenannte Tankmischungen durch gemeinsame Verdünnung der getrennt formulierten Komponenten mit Wasser hergestellt werden.

Gegenstand der Erfindung sind auch Mittel, die die beiden Komponenten A und B neben geeigneten Formulierungshilfsmitteln enthalten.

Die Komponenten können auf verschiedene Art formuliert werden, je nachdem welche biologischen und/oder chemisch-physikalischen Parameter vorgegeben sind. Als Formulierungsmöglichkeiten kommen beispielsweise in Frage: Hefeformulierungen, Stärkeformulierungen, Spritzpulver (WP), emulgierbare Konzentrate (EC), wäßrige Lösungen (SL), Emulsionen (EW) wie Öl-in Wasser- und Wasser-in-Öl- Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG) und (WEG), ULV-Formulierungen, Mikrokapseln, Köder (Substrate) oder Wachse.

Von besonderem Interesse sind Öl- in Wasser und Wasser-in-Öl-Emulsion, Spritzpulver oder Granulate.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N. Y., 2. Auflage 1972 - 73; K. Martens, "Spray Drying Handbook", 3. Auflage, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2. Auflage, Darland Books, Caldwell N. J.; H. v. Olphen, "Introduction to Clay Colloid Chemistry", 2. Auflage, J. Wiley Sons, N. Y., Marsden, "Solvents Guide", 2. Auflage, Interscience, N. Y. 1950; McCutcheon's, "Detergents and Emulsifiers Annual", MC Publ. Gorp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie selektiven Herbiziden, und spezifischen Fungiziden oder Insektiziden, sowie Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder Fettamine, Alkan- oder Alkylbenzolsulfonate und Dispergiermittel, z. B. ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen, unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z. B. Talkum, natürlichen Tonen wie Kaolin, Bentonit und Pyrophyllit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, der beiden Komponenten A und B. Die Konzentrationen der Wirkstoffe A und B können in den Formulierungen verschieden sein.

In Spritzpulvern beträgt die Wirkstoffkonzentration z. B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, vorzugsweise 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten, z. B. wasserdispergierbaren Granulaten, hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 5 und 90 Gew.-%, bei Streugranulaten zwischen 1 und 50 %, bevorzugt zwischen 2 und 25 %.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vorder Anwendung üblicherweise nicht mehr mit weiteren inerten Stoffen verdünnt.

Die Komponente B kann z. B. wie von Prior, C. et al. im Journal of Invertebrate Pathology 52, 66 bis 72 (1988) beschrieben, formuliert werden.

Der Begriff "beschichtetes Material" bezeichnet eine Formulierung, die in der Patentanmeldung WO 92/20229 (1992, Korea Res. Inst. Chem. Technology) beschrieben wird. Von besonderem Interesse sind außerdem Granulate, die in dem US-Patent 5,120,542 (1992, ICI) beschrieben werden.

Mit den äußeren Bedingungen, wie z. B. Temperatur, Feuchtigkeit u. a., variiert die erforderliche Aufwandmenge der Mischung.

Die Kombination aus den beiden Komponenten Endosulfan (A) und dem Pilz (B) eignet sich bei guter Pflanzenverträglichkeit und günstiger Warmblütertoxizität zur Bekämpfung von tierischen Schädlingen, insbesondere Insekten und Spinnentieren, die in der Landwirtschaft vorkommen.

Die synergistische Mischung der beiden Komponenten wirkt gegenüber normal sensiblen und resistenten Arten sowie einzelnen Entwicklungsstadien. Die erfindungsgemäßen Mittel weisen eine ausgezeichnete insektizide Wirksamkeit gegen ein breites Spektrum wirtschaftlich wichtiger Schädlinge auf. Im einzelnen seien beispielhaft einige Vertreter der Schädlinge genannt, die durch die erfindungsgemäßen Mittel kontrolliert werden können, ohne daß durch die Nennung eine Beschränkung auf bestimmte Arten erfolgen soll.

Ordnung der Isopoda z.B. Oniscus asellus, Armadium vulgare, Porcellio scaber. Aus der Ordnung der Diplopoda z.B. Blaniulus guttulatus. Aus der Ordnung der Chilopoda z.B. Geophilus carpophagus, Scutigera spec. Aus der Ordnung der Symphyla z.B. Scutigerella immaculata. Aus der Ordnung der Thysanura z.B. Lepisma saccharina. Aus der Ordnung der Collembola z.B. Onychiurus armatus. Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregarla. Aus der Ordnung der Dermaptera z.B. Forficula auricularia. Aus der Ordnung der Isoptera z.B. Reculitermes spp. Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp. und Damalinea spp. Aus der Ordnung der Thysanoptera z.B. Hercinothrips femoralis und Thrips tabaci. Aus der Ordnung der Heteroptera z.B. Eurygaster spp., Dysdercus intermedius, Piesma quadrata, Cimex lectularius, Rhodnius prolixus und Triatoma spp. Aus der Ordnung der Homoptera z.B. Aleurodes brassicae, Bemisia tabaci, Trialeurodes vaporariorum, Aphis gossypil, Brevicoryne brassicae, Cryptomyzus ribis, Doralis fabae, Doralis pomi, Eriosoma lanigerum, Hyalopterus arundinis, Matrosiphum avenae, Myzus spp., Phorodon humuli, Rhopalosiphum padi, Empoasca spp., Scotinophora coarctata, Drosicha mangiferae, Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. und Psylla spp.

Aus der Ordnung der Heteroptera, z.B. Lygus spp., Nezara viridula, Drasicha mangiferae und Euschistus spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Diathrea sacharalis, Bucculactrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Ostrinia spp., Perileucoptera coffeella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Dendrolimus spp., Laspeyresia pomonella.

Aus der Ordnung der Coleoptera z.B. Anobium punctatum, Hypothemenus hampei, Pityogenes chalcographus, Cyrtomon luridus, Xyloterus lineatus, Ips typographus, Rhizopertha dominica, Bruchidius obtectus, Acenthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Sitona lineatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Minus spp., Niptus hololeucus, Gibbium psylloides, Tribolium spp., Brontispa longissima, Tenebrio molitor, Agriotes spp., Conoderus spp., Melolontha melolontha, Sphenophorus-Levis, Amphimallon solstitialis und Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypobosca spp., Glossina morsitans, Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae und Tipula paludosa.

Aus der Ordnung der Sipnonaptera z.B. Xenopsylla theopis, Ceratophyllus spp. Aus der Ordnung der Arachnida z.B. Scorpio maurus und Latrodectus mactans. Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Insbesondere eignet sich die erfindungsgemäße Kombination von Endosulfan (α,β, Sulfate) und Beauveria bassiana zur Bekämpfung von sensiblen und resistenten Heliothis spp., Anthonomus spp., Hypothememus hampei, Spodoptera spp., Nephotettix spp., Trichoplusia spp, Leptinotara decemlineata und anderen fressenden und saugenden Insekten oder Spinnmilben (Weiße Fliege, Lepidoptera-Larven).

Mit den erfindungsgemäßen Wirkstoffkombinationen wird eine insektizide und akarizide Wirkung erreicht, die über das hinausgeht, was auf Grund der Wirkung der Einzelkomponenten zu erwarten ist. Diese Wirkungssteigerungen erlauben es, die Einsatzmengen der einzelnen Wirkstoffe erheblich zu reduzieren. Die Kombination der Wirkstoffe kann auch ihre Dauerwirkung verbessern oder eine Beschleunigung der Wirkungsgeschwindigkeit verursachen. Solche Eigenschaften bieten dem Anwender erhebliche Vorteile bei der praktischen Insektenbekämpfung. Er kann Insekten billiger, rascher, mit weniger Arbeitsaufwand sowie dauerhafter bekämpfen und dadurch in einem Kulturpflanzenbestand mehr Ertrag ernten.

Eine weitere Wirkungssteigerung läßt sich durch sogenannte "feeding attractants" bzw. Phagostimulantien , wie z. B. Konsume (Fa. Pharmone), ATPlus, Hefe, Stärke, Stirrup (Fa. Atochem. North America Inc., USA) und Coax erzielen.

Obgleich die erfindungsgemäßen Mittel eine ausgezeichnete insektizide und akarizide Aktivität aufweisen, wird die Kulturpflanze gar nicht geschädigt. Die Mittel eignen sich aus diesen Gründen besonders in Kulturen von Baumwolle, Soja und Reis. Sie eignen sich ebenfalls zur Bekämpfung von Schädlingen im Kaffee-, Obst-, Blumen- und Gemüseanbau oder auch Weinbau.

Folgende Beispiele dienen zur Erläuterung der Erfindung, ohne daß diese darauf beschränkt wäre:

### A. Biologische Beispiele

In allen Fällen wurde bei den Kombinationen zwischen dem errechneten und dem gefundenen Wirkungsgrad unterschieden.

Ist die tatsächliche Schädigung größer als die rechnerisch zu erwartende, so ist die Wirkung der Kombination mehr als additiv, d. h. es liegt ein synergistischer Wirkungseffekt vor. Die erfindungsgemäßen Wirkstoffkombinationen haben eine insektizide Wirkung, die höher ist als sie auf Grund der beobachteten Wirkungen der Einzelkomponenten bei alleiniger Anwendung zu erwarten ist. Die Wirkstoffkombinationen sind somit synergistisch.

### Beispiel 1: Spodoptera littoralis

Larven des ägyptischen Baumwollwurms (Spodoptera littoralis L 3) wurden zusammen mit entsprechendem Futtermaterial mit den Komponenten Endosulfan (A) und B. bassiana (B) bzw. deren Mischungen besprüht. Der Effekt der Einzelkomponenten bzw. der Einzelkomponentenmischungen wurde 7 Tage nach Aufbewahrung bei 25°C und 90 % relative Luftfeuchte bewertet.

| Wirkstoff/Komponente | Wirkstoff ppm | % Mortalität | |
|---|---|---|---|
| Endosulfan (A) | 63 | 60 | |
| | 31 | 50 | |
| | 16 | 30 | |
| | 8 | 0 | |
| Beauveria bassiana (B) | 1,0 · 10¹⁰ Conidia/ha | 0 | |

| | (A) + (B) | rechnerisch | experimentell |
|---|---|---|---|
| (A) + (B) | 63 + 1,0 · 10¹⁰ | 60 | 80 |
| | 31 + 1,0 · 10¹⁰ | 50 | 60 |
| | 16 + 1,0 · 10¹⁰ | 30 | 60 |
| | 8 + 1,0 · 10¹⁰ | 0 | 40 |

### Beispiel 2: Spodoptera littoralis (pyrethroidresistent)

Pyrethroidrasisfente Larven des ägyptischen Baumwollwurms (Spodoptera littoralis L 3) wurden zusammen mit entsprechendem Futtermaterial mit den Wirkstoffen bzw. deren Mischungen besprüht. Der Effekt der Einzelkomponenten bzw. der Einzelkomponentenmischungen wurde 7 Tage nach Aufbewahrung bei 25°C und 90 % relative Luftfeuchte bewertet.

| Wirkstoff/Komponente | Wirkstoff ppm | % Mortalität | |
|---|---|---|---|
| Endosulfan (A) | 125 | 100 | |
| | 63 | 70 | |
| | 31 | 30 | |
| | 16 | 10 | |
| | 8 | 0 | |
| | 4 | 0 | |
| | 2 | 0 | |
| | 1 | 0 | |
| Beauveria bassiana (B) | 1,0 · 10¹⁰ Conidia/ha | 0 | |

| | (A) + (B) | rechnerisch | experimentell |
|---|---|---|---|
| (A) + (B) | 125 + 1,0 · 10¹⁰ | 100 | 100 |
| | 63 + 1,0 · 10¹⁰ | 70 | 80 |
| | 31 + 1,0 · 10¹⁰ | 30 | 50 |
| | 16 + 1,0 · 10¹⁰ | 10 | 40 |
| | 8 + 1,0 · 10¹⁰ | 0 | 20 |
| | 4 + 1,0 · 10¹⁰ | 0 | 0 |
| | 2 + 1,0 · 10¹⁰ | 0 | 0 |
| | 1 + 1,0 · 10¹⁰ | 0 | 0 |

### Beispiel 3: Heliothis virescens

Larven des Baumwollkapselwurms (Heliothis virescens, L 2) wurden zusammen mit entsprechendem Futtermaterial mit den Wirkstoffen bzw. deren Mischungen besprüht. Der Effekt der Einzelkomponenten bzw. der Einzelkomponentenmischungen wurde 7 Tage nach Aufbewahrung bei 25°C und 90 % relative Luftfeuchte bewertet.

| Wirkstoff/Komponente | Wirkstoff ppm | % Mortalität | |
|---|---|---|---|
| Endosulfan (A) | 125 | 70 | |
| | 63 | 30 | |
| | 31 | 30 | |
| | 16 | 20 | |
| | 8 | 10 | |
| | 4 | 0 | |
| | 2 | 0 | |
| | 1 | 0 | |
| | 0,5 | 0 | |
| Beauveria bassiana (B) | 1,5 · 10¹⁰ Conidia/ha | 16 | |

| | (A) + (B) | rechnerisch | experimentell |
|---|---|---|---|
| (A) + (B) | 125 + 1,5 · 10¹⁰ | 86 | 90 |
| | 63 + 1,5 · 10¹⁰ | 46 | 80 |
| | 31 + 1,5 · 10¹⁰ | 46 | 60 |
| | 16 + 1,5 · 10¹⁰ | 36 | 50 |
| | 8 + 1,5 · 10¹⁰ | 26 | 60 |
| | 4 + 1,5 · 10¹⁰ | 16 | 40 |
| | 2 + 1,5 · 10¹⁰ | 16 | 30 |
| | 1 + 1,5 · 10¹⁰ | 16 | 30 |
| | 0,5 + 1,5 · 10¹⁰ | 16 | 20 |

### Beispiel 4: Hypothenemus hampei

Adulte Kaffeekirschenbohrer (Hypothenemus hampei) wurden zusammen mit einer Kaffeekirsche (Futter) auf einer Filterpapierunterlage (Petrischale) mit den Wirkstoffen bzw. deren Mischungen besprüht. Der Effekt der Einzelkomponenten bzw. der Einzelkomponentenmischungen wurde 14 Tage nach Aufbewahrung bei 25°C und 90 % relative Luftfeuchte bewertet.

| Wirkstoff/Komponente | Wirkstoff ppm | % Mortalität | |
|---|---|---|---|
| Endosulfan (A) | 0,25 | 80 | |
| | 0,125 | 50 | |
| | 0,063 | 50 | |
| | 0,031 | 20 | |
| | 0,016 | 20 | |
| | 0,008 | 0 | |
| | 0,004 | 0 | |
| | 0,002 | 0 | |
| | 0,001 | 0 | |
| Beauveria bassiana (B) | 2 · 10¹³ Conidia/ha | 35 | |

| | (A) + (B) | rechnerisch | experimentell |
|---|---|---|---|
| (A) + (B) | 0,25 + 2 · 10¹³ | 100 | 100 |
| | 0,125 + 2 · 10¹³ | 85 | 100 |
| | 0,063 + 2 · 10¹³ | 85 | 100 |
| | 0,031 + 2 · 10¹³ | 55 | 80 |
| | 0,016 + 2 · 10¹³ | 55 | 70 |
| | 0,008 + 2 · 10¹³ | 35 | 70 |
| | 0,004 + 2 · 10¹³ | 35 | 70 |
| | 0,002 + 2 · 10¹³ | 35 | 70 |
| | 0,001 + 2 · 10¹³ | 35 | 60 |

### Beispiel 5: Anthonomus grandis

Adulte Baumwollkapselkäfer (Anthonomus grandis) wurden zusammen mit entsprechendem Futtermaterial (synthetisches Futter) mit den Wirkstoffen bzw. deren Mischungen besprüht. Der Effekt der Einzelkomponenten bzw. der Einzelkomponentenmischungen wurde 11 Tage nach Aufbewahrung bei 25°C und 90 % relative Luftfeuchte bewertet.

| Wirkstoff/Komponente | Wirkstoff ppm | % Mortalität | |
|---|---|---|---|
| Endosulfan (A) | 63 | 100 | |
| | 31 | 83 | |
| | 16 | 100 | |
| | 8 | 50 | |
| | 4 | 0 | |
| | 2 | 17 | |
| | 1 | 0 | |
| Beauveria bassiana (B) | 2,0 · 10¹³ Conidia/ha | 40 | |

| | (A) + (B) | rechnerisch | experimentell |
|---|---|---|---|
| (A) + (B) | 63 + 2 · 10¹³ | 100 | 100 |
| | 31 + 2 · 10¹³ | 100 | 100 |
| | 16 + 2 · 10¹³ | 100 | 100 |
| | 8 + 2 · 10¹³ | 90 | 100 |
| | 4 + 2 · 10¹³ | 40 | 100 |
| | 2 + 2 · 10¹³ | 57 | 84 |
| | 1 + 2 · 10¹³ | 40 | 50 |

### Beispiel 6: Leptinotarsa decemlineata

Adulte Kartoffelkäfer (Leptinotarsa decemlineata) wurden zusammen mit entsprechendem Futtermaterial (Kartoffelpflanzenblätter) mit den Wirkstoffen bzw. deren Mischungen besprüht. Der Effekt der Einzelkomponenten bzw. der Einzelkomponentenmischungen wurde 14 Tage nach Aufbewahrung bei 25°C und 90 % relative Luftfeuchte bewertet.

| Wirkstoff/Komponente | Wirkstoff ppm | % Mortalität | |
|---|---|---|---|
| Endosulfan (A) | 500 | 100 | |
| | 250 | 100 | |
| | 125 | 80 | |
| | 63 | 90 | |
| | 31 | 80 | |
| | 16 | 80 | |
| | 8 | 40 | |
| | 4 | 40 | |
| | 2 | 10 | |
| | 1 | 0 | |
| Beauveria bassiana (B) | 1,7 · 10¹⁰ Conidia/ha | 22 | |

| | (A) + (B) | rechnerisch | experimentell |
|---|---|---|---|
| (A) + (B) | 580 + 2 · 10¹⁰ | 100 | 100 |
| | 250 + 2 · 10¹⁰ | 100 | 100 |
| | 125 + 2 · 10¹⁰ | 100 | 100 |
| | 63 + 2 · 10¹⁰ | 100 | 100 |
| | 31 + 2 · 10¹⁰ | 100 | 100 |
| | 16 + 2 · 10¹⁰ | 100 | 100 |
| | 8 + 2 · 10¹⁰ | 62 | 80 |
| | 4 + 2 · 10¹⁰ | 62 | 80 |
| | 2 + 2 · 10¹⁰ | 32 | 80 |
| | 1 + 2 · 10¹⁰ | 22 | 60 |

### Beispiel 7: Trialeurodes vaporariorum

Verschieden konzentrierte Wirkstoffe bzw. Mischungen (endosulfan, B. bassiana) wurden auf Bohnenblätter (Phaseolus vulgaris) gesprüht und anschließend mit 50 adulte Weiße Fliege (Trialeurodes vaporariorum) besetzt. Der Effekt der Einzelkomponenten bzw. der Einzelkomponentenmischungen wurde 8 Tage nach Aufbewahrung bei 25°C und 80 % relative Luftfeuchte bewertet.

| Wirkstoff/Komponente | Wirkstoff ppm | % Mortalität | |
|---|---|---|---|
| Endosulfan (A) | 125 | 100 | |
| | 63 | 84 | |
| | 31 | 50 | |
| | 16 | 36 | |
| | 8 | 24 | |
| | 4 | 0 | |
| | 2 | 0 | |
| | 1 | 0 | |
| | 0,5 | 0 | |
| | 0,25 | 0 | |
| Beauveria bassiana (B) | 2,24 · 10¹⁰ Conidia/ha | 36 | |

| | (A) + (B) | rechnerisch | experimentell |
|---|---|---|---|
| (A) + (B) | 125 + 2,24 · 10¹⁰ | 100 | 100 |
| | 63 + 2,24 · 10¹⁰ | 100 | 100 |
| | 31 + 2,24 · 10¹⁰ | 86 | 100 |
| | 16 + 2,24 · 10¹⁰ | 52 | 100 |
| | 8 + 2,24 · 10¹⁰ | 44 | 100 |
| | 4 + 2,24 · 10¹⁰ | 36 | 72 |
| | 2 + 2,24 · 10¹⁰ | 36 | 72 |
| | 1 + 2,24 · 10¹⁰ | 36 | 40 |
| | 0,5 + 2,24 · 10¹⁰ | 36 | 30 |
| | 0,25 + 2,24 · 10¹⁰ | 36 | 32 |

## Patentansprüche

1. Insektizide und/oder akarizide Mittel, gekennzeichnet durch einen wirksamen Gehalt von Endosulfan (A) und Beauveria bassiana (B).

2. Mittel nach Anspruch 1, dadurch gekennzeichnet, daß das Mittel 1 bis 99 Gew.-% eines Mittels gemäß Anspruch 1 neben üblichen Formulierungsmitteln enthält.

3. Verfahren zur Bekämpfung von Schadinsekten oder Akarina, dadurch gekennzeichnet, daß man auf diese oder die von ihnen befallenen Pflanzen, Flächen oder Substrate eine wirksame Menge des Mittels gemäß Anspruch 1 appliziert.

4. Verfahren zur Herstellung eines Mittels gemäß Anspruch 1 oder 2, dadurch gekennzeichnet, daß man das Mittel analog einer üblichen Pflanzenschutzmittelformulierung aus der Gruppe, enthaltend Spritzpulver, emulgierbare Konzentrate, wäßrige Lösungen, Emulsionen, versprühbare Lösungen (Tank-mix), Dispersionen auf Öl- und Wasserbasis, Suspoemulsionen, Stäubemittel, Beizmittel, Boden- oder Streugranulate, beschichtetes Material, wasserdispergierbare sowie wasseremulgierbare, Granulate, ULV-Formulierungen, Mikrokapseln, Silica-Gele, Polymer-Gele, Saccharomyces, Bakterien und Wachse formuliert.

5. Verfahren nach Anspruch 3, dadurch gekennzeichnet, daß die Nutzpflanzen Gemüse oder Zierpflanzen sind, die unter Glas kultiviert werden.

6. Verfahren nach Anspruch 3, dadurch gekennzeichnet, daß die Nutzpflanzenkultur Baumwolle, Soja, Reis oder Kaffee ist.

## Claims

1. An insecticidal and/or acaricidal composition which comprises an effective content of endosulfan (A) and Beauveria bassiana (B).

2. The composition as claimed in claim 1, which comprises 1 to 99% by weight of a composition as claimed in claim 1, besides conventional formulation auxiliaries.

3. A method of controlling insect pests or acarina, which comprises applying an effective amount of the composition as claimed in claim 1 to these insect pests or acarina or to the plants, areas or substrates infested with them.

4. A process for the preparation of a composition as claimed in claim 1 or 2, which comprises formulating the composition analogously to a conventional crop protection product formulation from the group consisting of the wettable powders, emulsifiable concentrates, aqueous solutions, emulsions, sprayable solutions (tank mixes), dispersions on an oil or water basis, suspoemulsions, dusts, seed-dressing agents, granules for soil application or for broadcasting, coated material, water-dispersible and water-emulsifiable granules, ULV formulations, microcapsules, silica gels, polymer gels, saccharomyces, bacteria and waxes.

5. The method as claimed in claim 3, wherein the crop plants are vegetables or ornamentals grown under glass.

6. The method as claimed in claim 3, wherein the crop is cotton, soya beans, rice or coffee.

## Revendications

1. Compositions insecticides et/ou acaricides; caractérisées par une teneur efficace en endosulfane (A) et en *Beauveria bassiana* (B).

2. Composition selon la revendication 1, caractérisé en ce que la composition contient de 1 à 99 % en masse d'une composition selon la revendication 1, avec des agents de formulation classiques.

3. Procédé de lutte contre les insectes nuisibles ou les acariens, caractérisé en ce qu'on leur applique, ou on applique sur les plantes, les surfaces ou les substrats qu'ils infestent, une quantité efficace de la composition selon la revendication 1.

4. Procédé de préparation d'une composition selon la revendication 1 ou 2, caractérisé en ce que l'on formule la composition de façon analogue à une formulation d'agent phytosanitaire classique du groupe contenant des poudres mouillables, des concentrés émulsionnables, des solutions aqueuses, des émulsions, des solutions pulvérisables (mélanges de cuve), des dispersions à base d'huile ou d'eau, des suspoémulsions, des poudres pour poudrage, des compositions désinfectantes, des granulés à appliquer sur le sol ou à saupoudrer, des produits revêtus, des granulés à disperser dans l'eau et à émulsionner dans l'eau, des formulations ULV, des microcapsules, des gels de silice, des gels de polymères, des Saccharomyces, des bactéries, et des cires.

5. Procédé selon la revendication 3, caractérisé en ce que les plantes utiles sont des légumes ou des plantes d'ornement cultivées sous verre.

6. Procédé selon la revendication 3, caractérisé en ce que la culture de plante utile est une culture de coton, de soja, de riz ou de café.
